# EUROPEAN PATENT APPLICATION

(11) **EP 1 785 180 A1**
(43) Date of publication of application: **16.05.2007**
(21) Application number: 06022297.3
(22) Date of filing: 25.10.2006
(51) Int. Cl.: B01D 36/04, B01D 21/02, B01D 21/04, B01D 29/01, C02F 1/00, C02F 9/00

(54) **Process and plant for clarification and filtration of fluids in one tank**

(30) Priority: 15.11.2005 IT pr20050069
(71) Applicant: Allegri Geom. Primo S.r.l., 43100 Parma (IT)
(72) Inventor: Allegri, Primo, 43100 Parma (IT)
(74) Representative: Guareschi, Antonella

(57) **Abstract**

The invention finds application in the field of waste water treatment and particularly relates to a plant and a process for water clarification and filtration in one tank (1a) containing the fluid (10) to be purified. The filtration step is executed after the clarification step. The plant 1 includes a tank (1a), in which filter walls (2, 3) and a diaphragm wall (7) are introduced, to define three sectors or compartments (A, B, C) in the tank 1a: sector C is designed for settling and removal of sludge by traditional means, sector B is designed for receiving the filtrate at a variable level below the free surface of sector C, without substantially affecting the retention time in the clarification compartment when using existing clarification tanks. The filter wall (2) in the one-wall version and the filter walls (2 and 3) in the double wall version have two receptacles for a corresponding number of panels (2a, 2b) and/or (3a, 3b). These panels may be removed from the top and introduced in a container structure (4).

## Description

The present invention addresses a process and plant for water clarification and filtration using one treatment tank.

In water purification for potabilization of municipal or industrial wastewater, such functions are performed in prior art techniques by two distinct treatments, occurring in two separate tanks: one is for clarification, or settling, and the other is for the filtration required for any subsequent disinfection treatment, to be carried out in a special compartment.

The settling tank has such a size and construction as to provide precipitation and collection of settlable sludge; the filter tank has such a size and construction as to allow filtration of liquid from the settling tank, while holding back the residual solids that have not precipitated in the upstream settling tank.

This system has always been used, mainly for the following reasons:
- The high solid content in water subjected to settling, whether it is municipal or process (industrial) wastewater, or water for potabilization from containers (rivers or lakes) as compared with the maximum acceptable solid content in water subjected to filtration;
- The lack of standards requiring as high wastewater recovery as possible; as a result, most purification plants currently end up with final settling;
- The lack of filtration machines or systems designed to allow servicing or even simple maintenance to occur without any filtration shutdown although they are situated in separate tanks. For such interventions to be carried out, the flow from the settling tank has to be stopped. This is only possible if the two treatments (settling and filtration) are performed in two separate tanks, so that at least the settling service is maintained. Hence, in order that the filtration service is not interrupted, a backup filtration plant has to be provided, with a dedicated tank to which water from the settling tank has to be diverted.

This invention has the object of providing a process that performs both settling and filtration functions using a single water tank.

The advantages provided by this process may be summarized as follows:
■ Savings on civil works and associated management costs;
■ A lower pressure drop (due to liquid level difference), the two functions being performed, one after the other, in the same tank;
■ Space savings and an lower environmental impact.

A further advantage is that, if a water purification plant, including a settling tank, already exists, this plant may be conveniently adapted by fitting such tank with the necessary filtration equipment, as described below, thereby avoiding the costs for construction of a special tank therefor.

These purposes and advantages are all achieved by a process for water clarification and filtration in one tank and a plant obtained thereby, according to this invention, which is characterized as claimed in the annexed claims and particularly in that both settling and filtration treatments are performed in one tank.

These and other features will be more apparent from the following description of a few embodiments, which are shown by way of example and without limitation in the accompanying drawings, in which:
- Figure 1 is a partial plan view of a clarification and filtration plant according to the present invention;
- Figure 2 is a plan view of a variant embodiment of the clarification and filtration plant;
- Figure 3 is an elevational view of the clarification and filtration plant as shown in Figure 1;
- Figure 4 is an elevational view of the clarification and filtration plant as shown in Figure 2;

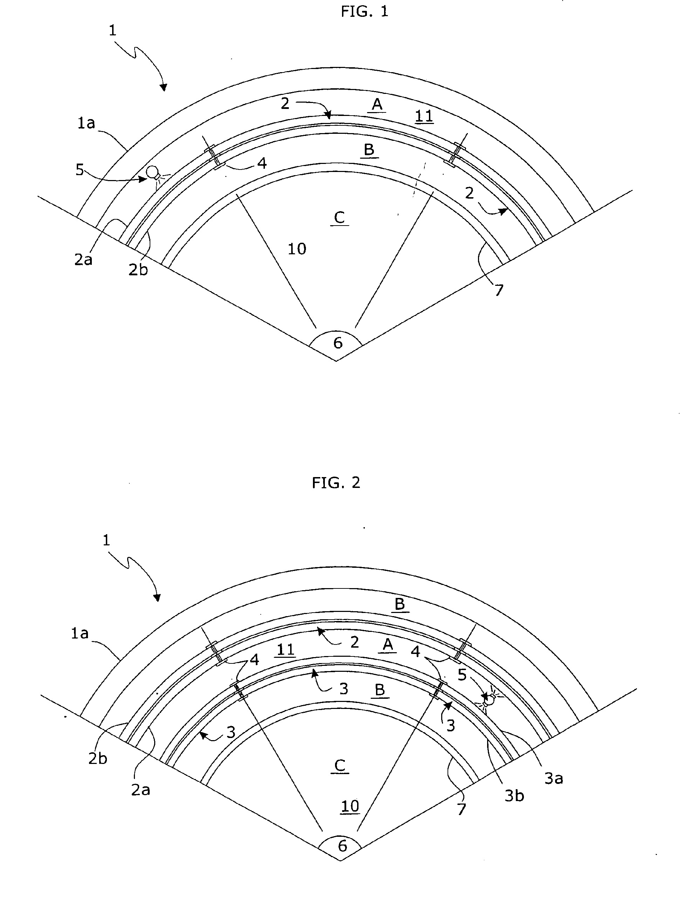

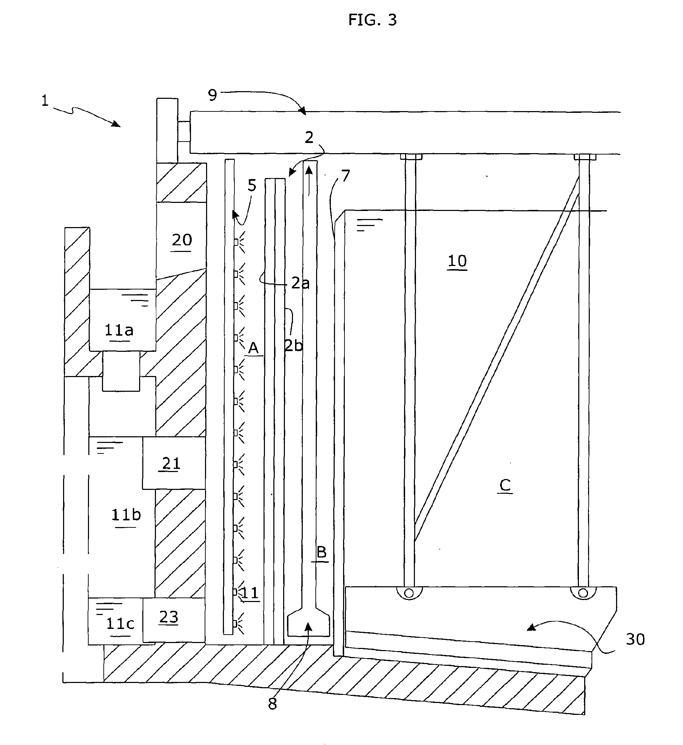

Referring to Figures 1 and 3, numeral 1 generally designates a waste water or fluid filtration and clarification plant according to this invention; a portion of the system is only shown, as it has a circular plan shape.

In this embodiment, the plant 1 is defined by a circular tank 1a which is designed to receive the fluid to be purified; such fluid is generally introduced at the center, as shown by the inlet pipe 6; the mud trap is also located centrally on the bottom of the tank for removal of sludge conveyed therein by a sludge scraper.

The tank 1a contains a filter wall 2, which is composed of filter panels 2a or 2b, and a diaphragm/wall 7, which are both closed and concentric to each other.

The filter wall 2 and the diaphragm wall 7 divide the tank 1a into three areas, A, B and C; the panels 2a and 2b are adapted to hold back the sludge and the solid residues of the fluid 10 to be purified.

Sector C is designed for settling and removal of sludge by traditional means, whereas sector B is designed for receiving the filtrate at a level that may be well below the free surface of area C, without substantially affecting the retention time.

The sludge that precipitates to the bottom of area B when washed out of the filter wall will be removed therefrom by suction using special equipment of the plant (1).

Area A is designed for collection and discharge of filtered water from the outlet 23 on the bottom of the filter panel.

The fluid to be purified 10, introduced at the center of area C settles therein and thus completes the first settling step; then, as it passes into area B through the filter panels 2a or 2b, it is filtered thereby and passes into area A, from which it exits over weirs 20 or 21 or 23 formed in the wall of the tank 1a as filtered liquid 11a or 11b or 11c.

Discharge from the bottom 23 requires a lower power (pressure) and a smaller amount of water for washing filter cloths, as the washing unit operates under vacuum and not dipped in the filtered liquid which, under equal pressure and flow conditions, would reduce effectiveness.

The liquid 11 so filtered may be then conveyed to a disinfection station in a separate external tank.

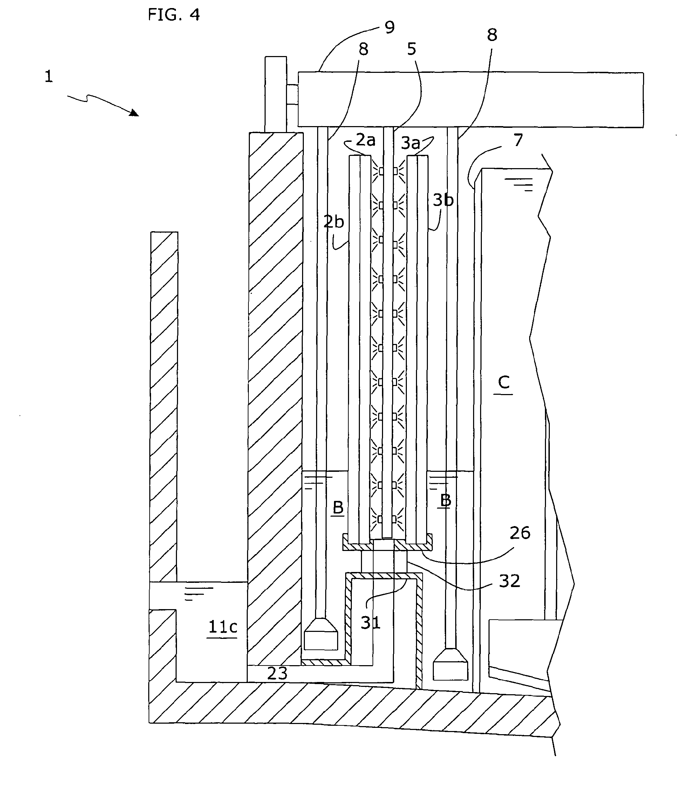

Figures 2 and 4 show a variant embodiment of the above plant 1 which comprises, in addition to the filter wall 2, an identical filter wall 3, to define three areas in the tank, two settling areas B and a filtration area A.

Each filter wall 2 or 3 has two receptacles (in a side-by-side relationship) in which a filter panel may be introduced as mentioned above: in these examples, the two panels are designated by 2a, 2b or 3a, 3b.

Nevertheless, one receptacle only will be used for filtration, the second one acting as a backup receptacle whenever the operating filter panel should be replaced.

This arrangement is indispensable, otherwise removal of any one panel in the plant would cause a plant shutdown.

For this purpose, the operating filter panels are usually those designated by 2a in the one-wall version and those designated by 2a and 3a in the double filter wall version: the adjacent panels 2b and 3b only have to be introduced in case of periodic maintenance of the panels 2a and 3a; these panels 2b, 3b shall be obviously added before removing the others.

Once the maintenance is completed, the panels 2a and 3a will be reintroduced and the panels 2b and 3b will be removed. This procedure is essential to prevent filtration shutdowns in the plant.

The panels 2 of the one-wall version as shown in Figures 1 and 3 may reach the bottom of the tank 1a: in this case, either the blade of the sludge scraper 30 on the bottom of the tank 1a has to be shortened, or the panels may reach a level above the bottom.

In the latter case, there will be no need to shorten the blade of the sludge scraper 30, and its presence will further facilitate the removal of sludge beneath the filter panels.

Referring to Figure 4, in the U shape illustrated herein the walls 2 and 3 are joined by a base 26, also having a circular shape, in which one or more through openings are formed to allow connection to the discharge 23 of the clarified liquid.

The base 26 is supported by one or more vertical plates or profiles 32, which in turn rest on an annular base 31 between the diaphragm 7 and the vertical wall that delimits the tank 1a.

The filter cloths 2 and 3 will be preferably washed by one or more washing units 5 introduced in area A and having a plurality of nozzles adapted to direct, countercurrently to the feed direction of the liquid to be filtered 10, jets of clean (i.e. filtered) water having a sufficient pressure to pass through the filter cloths 2a or 2b and 3a or 3b, thereby removing the sludge accumulated thereon, which will fall on the bottom of the tank 1a, between the filter panel and the diaphragm wall 7 and will be removed therefrom by suction using sludge extractors 8.

These sludge extractors 8 are connected to a bridge crane 9, which may be either of the rotary type, for circular designs, or of the rectilinear type for rectilinear designs (square or rectangular tanks).

In the solution of Figures 1 and 3, the filtered water may be discharged at the top or at the base of the tank 1a, or at any other intermediate level therebetween.

In accordance with the solution of Figures 2 and 4, the filtered water is preferably discharged within the pipe 23 connected to filtrate area A (now between two B areas), as described above.

Alternatively to the circular plan shape, the above tank 1a may have a rectangular shape or any other shape.

The filter members (panels) contained therein may have an arched or straight shape, i.e. conforming to the contour of the tank 1a.

The filter panels 2a, 2b, 3a, 3b are independent from each other and introduced in a special containing structure 4, wherefrom they are extracted from the top of the tank 1a.

Water tightness between the panels and the panel receiving guides is provided on three sides, namely the lower side and the two lateral sides, whereas the upper side is not reached by the fluid to be filtered, as it is above its level.

Such water tightness may be achieved using an arrangement of pressure or expansion seals.

The number of filtering cloth washing units 5 is plant-specific, depending on the plant size.

In short, the process to be carried out in the plant 1 for clarification and filtration in one tank 1a is as follows:
■ The liquid to be purified 10 is introduced trough an inlet pipe 6, which may be located at the center, or at one side on square or rectangular tanks;
■ The fluid 10 so introduced fills area C of the tank 1a, where it settles;
■ A sludge scraper 30 removes the sludge that has settled on the bottom of the tank 1a;
■ After settling, the fluid passes into area B over the diaphragm wall 7 in the tank 1a, acting as a weir;
■ The fluid in area B is filtered by the panels 2a (or 2a and 3a) of the filter walls and later collected in area A;
■ From area A, the fluid is conveyed to discharge or disinfection;
■ Washing means 5 in area A clean the filter walls 2 and/or 3 by countercurrent washing;
■ The filtrate 11a or 11b or 11c exits over weirs 20 or 21 or 23, which may be located at different exit levels depending on plant types.

When a new purification plant has to be built, the tank 1a may be made of reinforced concrete or metal; nevertheless, the above process may be also carried out in existing plants, using the existing clarification tank.

While in the illustrated embodiments the tank 1a has a circular shape and the filter panels 2a or 2b are divided into arcs conforming to such shape, the inventive principle also applies to square and rectangular tanks, or having any other shape, the geometry of filter walls 2 and/or 3 and the annexed diaphragm wall 7 being accordingly adapted.

According to a further improvement, not shown, combinations may be provided of existing square tanks and cylindrical filter walls.

In this case, the filter walls will not reach the bottom of the tank, to allow the sludge scraper to pass thereunder, in any settling area, and will be supported to allow operation of the center-driven sludge scraper.

The type of plant 1 to be used will be selected depending on volumetric load and solid concentration in the effluent to be filtered. One-wall plants are desirable as far as possible, due to their simpler installation and management, whereas double wall plants are used when the available surface of the clarification tank walls for installation of the filter assembly is insufficient. This occurs, for example, in hopper-type settling tanks (Dortmund wells), which have small vertical wall surfaces.

The filter walls (2, 3), which are described and shown herein as having circular and/or arc shapes, may also be flat for fitting square or rectangular tanks.

Settling in area C may occur either naturally by gravity, as described in this example, or in an accelerated manner using known acceleration systems, such as lamella settlers.

The clarification and filtration process and plant are susceptible of a number of variants and/or additions as known in the art without departure from the scope of this invention.

For example, means may be provided in the diaphragm wall 7 and over the liquid surface, for collecting and removing foams deposited on the surface of the settling area, to prevent them from passing into the adjacent filtering section.

These means may include, for instance, a skimmer blade which can act as a filter for any unsettled material flowing into area A.

The above plant and process whereby the two treatments are performed in one tank, provide the following advantages:
- The provision of two filter panel receptacles, one of them being actually used, and the other allowing insertion of a filter panel before removal of a panel to be serviced, allows maintenance and servicing to occur with no shutdown of the filtering function;
- Both the panels and any other filter system equipment being susceptible to maintenance, servicing or replacement may be individually removed from the top. Thus, there will be no need to lower the liquid level in the settling portion of the tank or to empty the tank for such interventions to be performed. As a result, settling is not interrupted;
- The filtering system has been conceived and fabricated for filtration not to be interrupted even when maintenance, servicing or replacement of any component thereof are being performed.

## Claims

1. A process for fluid clarification and filtration, **characterized in that** clarification (or settling) and filtration occur in a single tank (1a) containing the fluid (10) to be purified.

2. A process as claimed in claim 1,
**characterized in that** said filtration step occurs after the clarification step, the tank (1a) being partitioned into at least three areas (A, B, C), area (C) being designed for containing the liquid to be settled, area (B) being designed for containing the settled liquid to be filtered and area (A) being designed for containing the filtered liquid.

3. A process as claimed in claim 1,
**characterized in that** said partitioning occurs by means of filter walls (2) or (2 and 3) and a diaphragm/wall (7) in the tank (1a) and said filter walls (2) or (2 and 3) being adapted to filter the settled liquid.

4. A process as claimed in claim 1,
**characterized in that** continuous operation is provided, the filter walls (2) or (2 and 3) having two receptacles for receiving operating panels (2a, 3a) and auxiliary panels (2b, 3b), the latter being adapted to operate in case of failure of the operating panels or maintenance thereof.

5. A process as claimed in claim 1,
**characterized in that** the liquid to be purified is supplied into the settling area (C).

6. A process as claimed in claim 1,
**characterized in that** the filtered liquid is recovered from area (A) after filtration thereof by means of filter walls.

7. A process as claimed in claim 1,
**characterized in that** the filter panel cloths are countercurrently washed under pressure.

8. A process as claimed in claim 1,
**characterized in that** it includes sludge scraping of the bottom of the settling compartment, i.e. area (C).

9. A process as claimed in claim 1 and 7, **characterized in that** it includes removal of the sludge deposited in area (B) after washing, by suction.

10. A process as claimed in claim 6,
**characterized in that** filtered water is recovered from area (A), at the top or at the base of the tank (1a), or at any other intermediate level therebetween.

11. A process as claimed in claim 1,
**characterized in that** it the liquid to be purified is supplied:
a. at the center of the tank (1a) and the filtered liquid is recovered from the periphery if the tank has a cylindrical shape or the filtration system has a circular shape;
b. from one of the sides of the square or rectangular tanks.

12. A process as claimed in claim 1,
**characterized in that** settling occurs in area (C), either naturally or in an accelerated manner, using known acceleration systems, such as lamella settlers.

13. A fluid purification plant (1) comprising a tank (1a) for treatment of liquid to be purified, **characterized in that** the tank (1a) comprises filter walls (2) or (2 and 3) and at least one diaphragm wall (7) both closed and concentric and adapted to partition said tank (1a) into at least three compartments (A, B, C), the diaphragm wall (7) acting as a weir over which the settled liquid passes into area (B), in which filtration occurs by passage through said filter walls (2) or (2 and 3).

14. A plant (1) as claimed in claim 13,
**characterized in that** each filter wall (2, 3) has two receptacles for receiving filter walls (2a, 2b) and (3a, 3b); one receptacle being only used for filtration, the second receptacle acting as a backup receptacle whenever the panel of the adjacent receptacle needs replacement; said replacement only occurring after insertion of the new panel in the backup receptacle.

15. A plant (1) as claimed in claim 14,
**characterized in that** the filter wall (2) is connected to the filter wall (3) by a base (26).

16. A plant (1) as claimed in claim 14,
**characterized in that** the base (26) is supported by one or more vertical plates (32), which in turn rest on an annular base (31) between the diaphragm (7) and the vertical wall that delimits the tank 1a.

17. A plant (1) as claimed in claim 14,
**characterized in that** it has outlets (20, 21, 23) for discharging the filtrate collected in the sector (A) after filtration.

18. A plant (1) as claimed in claim 16,
**characterized in that** the base (26) has one or more through apertures for connection to the outlet (23) for discharge of the clarified liquid.

19. A plant (1) as claimed in claim 14,
**characterized in that** the tank (1a) has a circular, square or quadrangular shape.

20. A plant (1) as claimed in claim 13,
**characterized in that** the filter walls (2) or (2 and 3) have a circular, square or quadrangular shape.

21. A plant (1) as claimed in claim 15,
**characterized in that** the panels (2a, 3a, 2b, 3b) are independent and introduced in a container structure (4).

22. A plant (1) as claimed in claim 15,
**characterized in that** the panels (2a, 3a, 2b, 3b) are removed from the container structure (4) from the top.

23. A plant (1) as claimed in claim 13,
**characterized in that** a sludge scraper (30) is placed on the bottom of the tank (1a) in the settling sector (C).

24. A plant (1) as claimed in claim 14,
**characterized in that** it comprises one or more washing units (5) in sector (A), having a plurality of nozzles adapted to direct jets of clean or filtered water under pressure countercurrently to the feed direction of the settled fluid.

25. A plant (1) as claimed in claims 14 and 16, **characterized in that** the filter walls (2, 3) have pressure or expansion seals between the panels (2a, 2b and 3a, 3b) and the panel receiving guides.

26. A plant (1) as claimed in claim 14,
**characterized in that** it comprises sludge extractor means (8) which remove by suction the sludge that has been washed out of the filter panels, said means being located in sector (B) of the tank (1a).

27. A plant (1) as claimed in claim 14,
**characterized in that** the filter walls (2, 3) may have circular and/or arc shapes, but also flat shapes when they are to be introduced in square or rectangular tanks.

28. A plant (1) as claimed in claim 14,
**characterized in that** combinations of quadrangular tanks and cylindrical walls may be provided; even with multiple circular designs depending on the ratio between the sides of the tank.
